# EUROPÄISCHE PATENTSCHRIFT

(11) **EP 2 000 373 B1**
(45) Veröffentlichungstag und Bekanntmachung des Hinweises auf die Patenterteilung: **08.01.2014**
(21) Anmeldenummer: 08009255.4
(22) Anmeldetag: 20.05.2008
(51) Int. Cl.: B60S 1/08

(54) **Optische Sensorvorrichtung zur Erfassung einer Benetzung und Verfahren zur Herstellung dieser Sensorvorrichtung**
Optical sensor device for capturing moistening and method for the production of such a device
Dispositif de capteur optique destiné à détecter la présence d'humidité et procédé de fabrication d'un tel dispositif

(30) Priorität: 04.06.2007 DE 102007025987
(43) Veröffentlichungstag der Anmeldung: 10.12.2008
(73) Patentinhaber: TRW Automotive Electronics & Components GmbH, 78315 Radolfzell (DE)
(72) Erfinder: Backes, Ulrich, 78315 Radolfzell (DE)
(74) Vertreter: Prinz & Partner

(56) Entgegenhaltungen:
- EP-A1- 1 647 458
- EP-A1- 2 091 792
- DE-A1- 19 821 335
- DE-A1- 19 830 120

## Beschreibung

Die Erfindung betrifft eine optische Sensorvorrichtung, die an eine Scheibe ankoppelbar ist, insbesondere an eine Windschutzscheibe eines Kraftfahrzeugs, mit einer Sensoreinheit, die einen Sender, einen Empfänger und eine Lichtleitereinheit aufweist, mit der ein vom Sender ausgestrahltes Lichtbündel in die Scheibe eingekoppelt, aus der Scheibe ausgekoppelt und auf den Empfänger gelenkt wird.

Solche Sensorvorrichtungen werden hauptsächlich als Regensensoren in Kraftfahrzeugen zur automatischen Betätigung der Scheibenwischer eingesetzt. Die Verwendung klassischer Linsen zur Beeinflussung des Strahlengangs, wie z.B. die gegen die Windschutzscheibe geneigten Linsen des in der EP 1 068 112 B1 gezeigten Regensensors, benötigen einen verhältnismäßig großen Bauraum.

Kleinere Bauformen sind, wie z.B. aus der WO 03/026937 A1 bekannt, durch Verwendung holographischer Sensoren möglich. Diese Sensoren basieren auf dem Prinzip der Lichtbeugung mit Hilfe von defraktiven Elementen und haben daher den prinzipbedingten Nachteil einer wesentlich geringeren Nutzlichtausbeute und einer höheren Störlichtempfindlichkeit.

Die DE 196 08 648 C1 schlägt bei einer optischen Sensorvorrichtung zur Verringerung des Abstands zwischen dem Sender bzw. dem Empfänger und der Lichtleitereinheit vor, die Lichteintritts- bzw. -austrittsflächen der Lichtleitereinheit als Fresnellinsen auszubilden. Dennoch ist der erforderliche Bauraum dieser Vorrichtung aufgrund der aufwendigen Lichtleitereinheit, die eine Anordnung der Sender- und Empfänger tragenden Leiterplatte senkrecht zur Windschutzscheibe bedingt, sehr groß.

Eine optische Sensorvorrichtung mit den Merkmalen des Oberbegriffs des Anspruchs 1 ist aus der DE 198 21 335 A1 bekannt. Um eine Ein- und Auskopplung der Strahlung unter einem Winkel von 90° zur Scheibenoberfläche zu ermöglichen, ohne dabei eine Verringerung des genutzten Anteils der abgestrahlten Sendeleistung in Kauf zu nehmen, wird bei dieser Vorrichtung die den Sender als divergentes Bündel verlassende Strahlung über hintere und seitliche Oberflächen der asymmetrisch aufgebauten Lichtleitereinheit durch Reflexion und Brechung so beeinflusst, dass sie im Bereich der Scheibenoberfläche als Parallelstrahlenbündel unter einem Winkel von etwa 45° zu dieser verläuft und danach auf den Empfänger fokussiert wird.

Die Erfindung schafft eine optische Sensorvorrichtung, die bei sehr geringem Bauraum eine sehr große Sensorfläche abtasten kann.

Dies wird durch eine optische Sensorvorrichtung mit den Merkmalen des Anspruchs 1 erreicht.

Die erfindungsgemäße Lichtleitereinheit mit den Fresnellinsenbereichen kann im Vergleich zu klassischen Linsen mit einer geringeren Dicke ausgeführt werden. Sie kann zudem platzsparend parallel zur Scheibe angeordnet werden, da sie eine schräge Ein-/Auskopplung des Lichtbündels in die bzw. aus der Scheibe ermöglicht. Die Erfindung baut auf der Erkenntnis auf, daß mit einer geeigneten schrägen Einkopplung eines parallel ausgerichteten Lichtbündels in die Scheibe eine relativ große Sensorfläche in der Scheibe abtastbar ist. Darüber hinaus ermöglichen die erfindungsgemäßen Fresnellinsenbereiche mit den zugeordneten reflektierenden Bereichen eine noch kompaktere Ausbildung der Lichtleitereinheit.

Besonders günstig für die Herstellung und den Zusammenbau der erfindungsgemäßen optischen Sensorvorrichtung ist eine Ausführungsform, bei der die Lichtleitereinheit einstückig ausgeführt ist. Insbesondere kann die Lichtleitereinheit als Platte ausgebildet sein, deren Vorderseite eine stufige Struktur (Fresnelstruktur) aufweist, wobei die Platte so angeordnet ist, daß die Vorderseite der Platte dem Sender bzw. dem Empfänger zugewandt ist. Abgesehen von der vereinfachten Herstellung der Lichtleitereinheit, bei der eine quaderförmige Platte aus geeignetem optischen Material nur die erforderlichen Stufen der Fresnelstruktur eingearbeitet werden müssen (z.B. durch Prägen), ist die relative Anordnung des Einkoppelbereichs der Lichtleitereinheit zum Auskoppelbereich fest vorgegeben und kann sich weder beim Zusammenbau noch im montierten Zustand aufgrund von mechanischen Einwirkungen ändern.

Weitere vorteilhafte und zweckmäßige Ausgestaltungen der erfindungsgemäßen optischen Sensorvorrichtung ergeben sich aus den Unteransprüchen.

Die Erfindung wird nachfolgend anhand bevorzugter Ausführungsformen unter Bezugnahme auf die beigefügten Zeichnungen näher erläutert. In den Zeichnungen zeigen schematisch:
- Figur 1 eine Draufsicht auf eine erfindungsgemäße optische Sensorvorrichtung;
- Figur 2 eine Schnittansicht entlang der Linie A-A in Figur 1; und
- Figur 3 eine Draufsicht auf eine Weiterbildung der erfindungsgemäßen optischen Sensorvorrichtung.

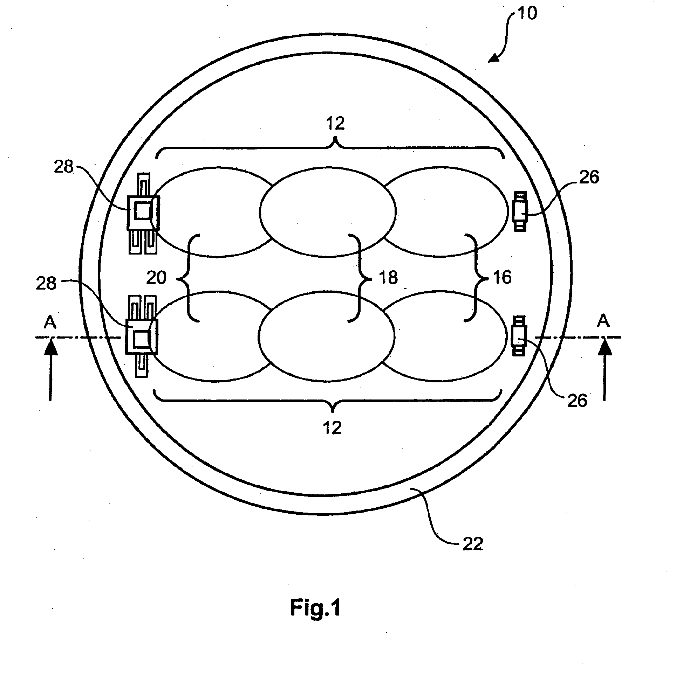

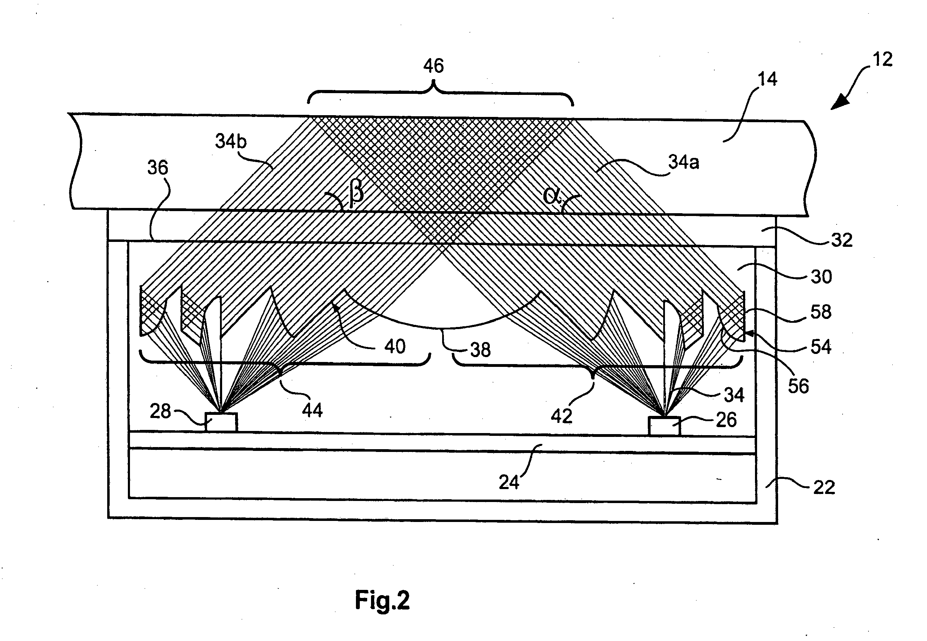

In Figur 1 ist eine erfindungsgemäße optische Sensorvorrichtung 10 mit zwei gleichartigen Sensoreinheiten 12 zur Erfassung der Benetzung einer Scheibe dargestellt. Die Sensorvorrichtung 10 wird im folgenden für den Einsatz als Regensensor beschrieben, der auf der Windschutzscheibe 14 (s. Fig. 2) eines Kraftfahrzeugs montiert ist. In der Darstellung der Figur 1 sind einige Komponenten der Sensorvorrichtung 10 weggelassen, um die später noch genauer beschriebenen Lichtauftreffflächen 16, 18, 20 deutlicher hervorzuheben.

Der grundsätzliche Aufbau der Sensoreinheiten 12 geht aus der Schnittdarstellung der Figur 2 hervor. In einem einseitig offenen Gehäuse 22 ist eine Leiterplatte 24 mit einem Sender 26 und einem Empfänger 28 für jede Sensoreinheit 12 untergebracht. Im montierten Zustand der Sensorvorrichtung 10, wenn also die Sensorvorrichtung 10 an einer Windschutzscheibe 14 angebracht ist, sind die Windschutzscheibe 14 und die Leiterplatte 24 im wesentlichen parallel zueinander ausgerichtet. Zwischen der Leiterplatte 24 und der Windschutzscheibe 14 ist eine Lichtleitereinheit 30 angeordnet, deren wesentliche Komponente eine Linsenplatte ist. Das Gehäuse 22 und die Leiterplatte 24 sind über einen Koppler 32 an der Windschutzscheibe 14 befestigt.

Der Sender 26 strahlt Licht in einem bestimmten Frequenzbereich aus, wobei der Begriff "Licht" nicht auf sichtbares Licht beschränkt ist, sondern insbesondere Strahlung im Infrarotbereich umfaßt. Das Licht wird vom Sender 26 als divergierendes, auf einen Einkoppelabschnitt 42 der Lichtleitereinheit 30 gerichtetes Lichtbündel 34 ausgestrahlt. Der Empfänger 28 ist auf den Sender 26 abgestimmt und gibt entsprechend dem registrierten Lichteinfall Signale an eine (nicht dargestellte) Auswerteeinheit ab.

Die Linsenplatte der Lichtleitereinheit 30 hat eine im wesentlichen plane, der Windschutzscheibe 14 zugewandte Rückseite 36, die im montierten Zustand parallel zur Windschutzscheibe 14 ausgerichtet ist. Die Lichtleitereinheit 30 ist insgesamt spiegelsymmetrisch aufgebaut, wobei die imaginäre Spiegelebene zwischen Sender 26 und Empfänger 28 senkrecht zur Windschutzscheibe 14 verläuft und den Einkoppelabschnitt 42 von dem dazu spiegelsymmetrischen Auskoppelabschnitt 44 trennt. Die dem Sender 26 bzw. Empfänger 28 zugewandte Vorderseite 38 der Linsenplatte weist eine stufige Struktur (im folgenden als Fresnelstruktur bezeichnet) auf, die nachfolgend genauer erläutert wird. Die Stufen 54 des Einkoppelabschnitts 42 weisen jeweils eine Einkoppelfläche 56 auf, durch die ein Teil des vom Sender 26 ausgestrahlten divergierenden Lichtbündels 34 in die Lichtleitereinheit 30 eintritt. Die Einkoppelflächen 56 sind nach der Art von asphärischen Fresnellinsen geformt. Die äußeren Stufen 54 des Einkoppelabschnitts 42 (in der Darstellung der Figur 2 die beiden rechten Stufen) weisen zudem reflektierende Flächen 58 auf, die im wesentlichen senkrecht zur Windschutzscheibe 14 ausgerichtet sind. Jede reflektierende Fläche 58 ist der Einkoppelfläche 56 der zugehörigen Stufe 54 zugeordnet, wie später noch aus der Funktionsbeschreibung der Sensorvorrichtung hervorgeht.

Der Auskoppelabschnitt 44 ist, wie bereits erwähnt, symmetrisch zum Einkoppelabschnitt 42 ausgebildet, wobei die Flächen 56 des Auskoppelabschnitts 44, die den Einkoppelflächen 56 des Einkoppelabschnitts 42 entsprechen, als Auskoppelflächen 56 bezeichnet werden, da das aus der Windschutzscheibe 14 ausgekoppelte Lichtbündel 34b die Lichtleitereinheit 30 durch diese Flächen verläßt.

Insgesamt weist die Fresnelstruktur der Lichtleitereinheit 30 also Fresnellinsenbereiche auf, denen reflektierende Bereiche zugeordnet sind, und Fresnellinsenbereiche, denen keine reflektierenden Bereiche zugeordnet sind.

Der Koppler 32 ist im dargestellten Ausführungsbeispiel durch ein transparentes, elastisches und im wesentlichen planes Medium gebildet, das im Frequenzbereich des vom Sender 26 ausgestrahlten Lichts keine ausgeprägten Brechungseigenschaften hat.

Im Betrieb trifft das vom Sender 26 in Richtung der Linsenplatte ausgestrahlte divergierende Lichtbündel 34 auf den Einkoppelabschnitt 42 der Lichtleitereinheit 30 (In Fig. 2 sind der Übersichtlichkeit halber nur die Teile des Lichtbündels 34 gezeigt, die tatsächlich zur Abtastung der Sensorfläche genutzt werden.) Die Fresnellinsenbereiche sorgen für eine parallele Ausrichtung der Strahlen der Lichtbündelteile, wobei die Einkoppelflächen 56 der äußeren Stufen 54 so geformt sind, daß hier die parallel ausgerichteten Strahlen der Lichtbündelteile auf zugeordnete reflektierende Flächen 58 der jeweiligen Stufen 54 gelenkt werden. Die Einkoppelflächen 56 und die reflektierenden Flächen 58 sind so aufeinander abgestimmt, daß sich nach der Reflexion an den reflektierenden Flächen 58 aus allen Lichtbündelteilen insgesamt ein einheitliches Lichtbündel 34a mit parallel ausgerichteten Strahlen ergibt, die unter einem Winkel von ca. 45° auf die Windschutzscheibe 14 gerichtet sind.

Das parallel ausgerichtete Lichtbündel 34a wird durch den Koppler 32 ohne wesentliche Richtungsänderung in die Windschutzscheibe 14 eingekoppelt, d.h. der Eintrittswinkel α beträgt etwa 45°. In der Windschutzscheibe 14 wird das Lichtbündel 34a total reflektiert, wobei die Lichtstrahlen weiterhin parallel orientiert bleiben. Die Auftrefffläche des parallel in die Windschutzscheibe 14 eingekoppelten Lichtbündels 34a (Lichtauftrefffläche 18 in Fig. 1) definiert die Sensorfläche 46, d.h. diejenige Fläche der Windschutzscheibe 14, die mittels der jeweiligen Sensoreinheit 12 auf Benetzung untersucht wird. Aufgrund des symmetrischen Aufbaus des Kopplers 32 und der Lichtleitereinheit 30 ist der Strahlengang des Lichtbündels nach der Totalreflexion in der Windschutzscheibe 14 symmetrisch zum zuvor beschriebenen Strahlengang. D.h. das reflektierte parallele Lichtbündel 34b wird über den Koppler 32 unter einem Austrittswinkel β von etwa 45° aus der Windschutzscheibe 14 aus- und in den Auskoppelabschnitt 44 der Lichtleitereinheit 30 eingekoppelt (Lichtauftrefffläche 20 in Fig. 1). Nach teilweiser Reflexion an den reflektierenden Flächen 58 treten Lichtbündelteile durch die Auskoppelflächen 56 aus der Lichtleitereinheit 30 aus. Die Auskoppelflächen 56 sind so geformt, daß sie die Lichtbündelteile auf den Empfänger 28 fokussieren.

Für eine bessere Signalauswertung werden die von den Empfängern 28 des Sensoreinheit-Paares gelieferten Signale in der Auswerteeinheit einer Differenzbildung unterzogen. Gleiches gilt für eventuelle weitere Paare von Sensoreinheiten 12, die zur Sensorvorrichtung 10 gehören.

Zur Vermeidung einer Fehlfunktion einer Benetzungs-Sensoreinheit 12 aufgrund einer unerwünschten Lichtein- und/oder -auskopplung, deren mögliche Ursachen nachfolgend noch genauer erläutert werden, ist wenigstens ein Teil der zwischen den einzelnen Fresnellinsenbereichen bzw. den zugeordneten reflektierenden Bereichen verbleibenden Bereichen der Lichtleitereinheit 30 mit Brechungs- oder Reflexionsstrukturen versehen. Dadurch wird Licht, das ansonsten durch diese Zwischenbereiche in die Lichtleitereinheit 30 ein- oder aus dieser ausgekoppelt werden und dadurch den Betrieb der Sensoreinheit 12 stören könnte, in "unschädliche" Richtungen umgelenkt. Deshalb können die Zwischenbereiche auch als Umlenkbereiche bezeichnet werden.

Grundsätzlich besteht bei der vorstehend beschriebenen Ausführungsform nämlich die Möglichkeit, daß neben dem erwünschten parallelen, zur Ausleuchtung der Windschutzscheibe 14 unter 45° benützten Lichtbündel 34a weitere, unerwünschte Lichtstrahlen durch Brechung oder Reflexion in den nicht mit Fresnelstrukturen belegten Bereichen der Lichtleitereinheit 30 erzeugt werden. Diese weiteren Lichtstrahlen können Gegenstände wie z. B. Sandkörner beleuchten, die sich vor der Vorderfläche der Windschutzscheibe 14 befinden und damit keine Benetzung darstellen. Von diesen Gegenständen wiederum kann ein Teil der Lichtstrahlen reflektiert werden und so unter Umständen durch andere, nicht strukturierten Bereiche der Lichtleitereinheit 30 schließlich in den Empfänger 28 gelangen. Des weiteren kann von außen einwirkendes Fremdlicht (z. B. Sonnenlicht) ebenfalls durch die unstrukturierten Bereiche in die Lichtleitereinheit 30 eindringen und schließlich auf den Empfänger 28 treffen. Ebenso kann unter Umständen Licht vom Sender 26 durch Mehrfachreflexion im mittleren Bereich der Lichtleitereinheit 30 direkt (d.h. ohne "Umweg" durch die Windschutzscheibe 14) zum Empfänger 28 gelangen. Alle diese Effekte können zu einer Fehlerkennung von Benetzung führen.

Die Strukturierung der Zwischenbereiche als Umlenkbereiche bezweckt also, unerwünschtes Licht durch Brechung oder Reflexion so umzulenken, daß die Funktion der Sensoreinheit 12 nicht beeinträchtigt wird. Eine aus einem anderem technischen Gebiet bekannte Möglichkeit der Strukturierung der Umlenkbereiche ist die sog. "Katzenaugenstruktur".

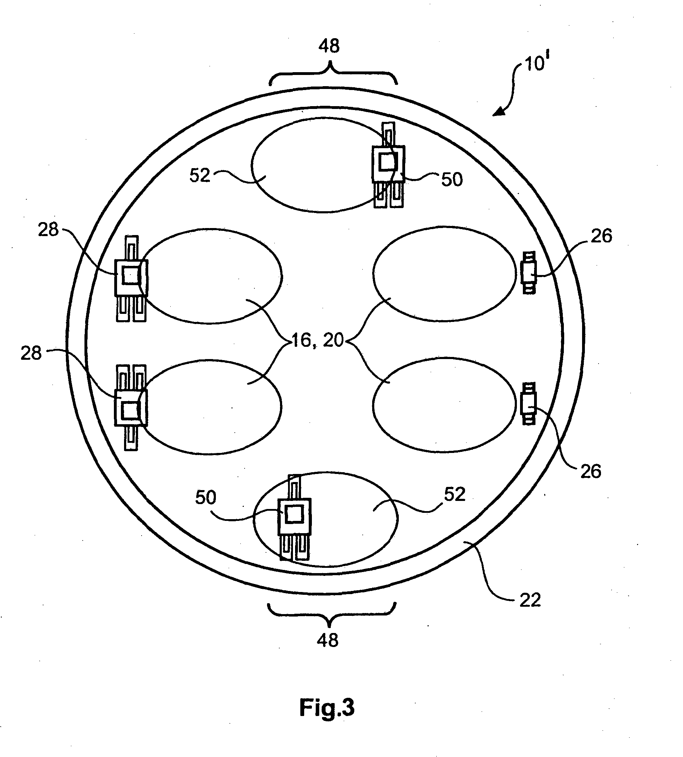

In Figur 3 ist eine Weiterbildung einer optischen Sensorvorrichtung 10' dargestellt. Zusätzlich zu den Sensoreinheiten 12 zur Erfassung der Benetzung der Windschutzscheibe 14 sind hier zusätzliche Taglicht-Sensoreinheiten 48 vorgesehen. Die Taglicht-Sensoreinheiten 48 umfassen jeweils einen Lichtempfänger 50 und eine Lichtleitereinheit (in Fig. 3 nicht sichtbar).

Die Lichtleitereinheit einer Taglicht-Sensoreinheit 48 ist ebenso wie bei einer Benetzungs-Sensoreinheit 12 grundsätzlich quaderförmig mit einer im wesentlichen planen, der Windschutzscheibe 14 zugewandten und parallel zu dieser angeordneten Rückseite. Die dem Lichtempfänger 50 zugewandte Vorderseite der Lichtleitereinheit weist Fresnelstufen (ohne reflektierende Bereiche) auf, die eine asphärische Fresnellinse bilden. Die optische Achse der Fresnellinse ist gegenüber der Windschutzscheibe 14 um etwa 45° geneigt.

Alternativ kann die Lichtleitereinheit einer Taglicht-Sensoreinheit 48 mit Fresnellinsenbereichen und reflektierenden Bereichen ausgeführt werden, die entsprechend der zuvor beschriebenen Fresnelstruktur einer Benetzungs-Sensoreinheit 12 (also wie der Einkoppelabschnitt 42 oder der Auskoppelabschnitt 44 der Lichtleitereinheit 30) ausgebildet und angeordnet sind.

Jede Fresnellinse bzw. Fresnelstruktur bildet Licht aus einem definierten Bereich 52 der Umgebung auf dem zugehörigen Lichtempfänger 50 ab. Damit erweitert sich die Funktionalität dahingehend, daß mit der kompakt aufgebauten Sensorvorrichtung 10' neben einer automatischen Scheibenwischerbetätigung auch eine automatische Steuerung des Fahrlichts ermöglicht wird.

Es ist grundsätzlich möglich, mehrere oder sogar alle Fresnelstrukturen (und ggf. Fresnellinsen) einer erfindungsgemäßen Sensorvorrichtung in einer einzigen Linsenplatte auszubilden.

Für die Herstellung einer Lichtleitereinheit 30 sind ausgehend von einer quaderförmigen Linsenplatte aus geeignetem optischen Material nur geringfügige Modifikationen auf deren Vorderseite 38 zur Bildung der erforderlichen Fresnelstruktur 40 (ggf. mit Umlenkbereichen) notwendig. Die Lichtleitereinheit 30 kann insbesondere durch einen Prägevorgang in der Linsenplatte gebildet werden. Im selben Prägevorgang können gleichzeitig weitere Lichtleitereinheiten (für Benetzungs- oder Taglicht-Sensoreinheiten) gebildet werden.

## Patentansprüche

1. Optische Sensorvorrichtung (10, 10'), die an eine Scheibe (14) ankoppelbar ist, insbesondere an eine Windschutzscheibe eines Kraftfahrzeugs, mit einer Sensoreinheit (12), die einen Sender (26), einen Empfänger (28) und eine Lichtleitereinheit (30) aufweist, die in einen Einkoppelabschnitt (42), über den ein vom Sender (26) ausgestrahltes Lichtbündel (34) in die Scheibe eingekoppelt wird, und einen Auskoppelabschnitt (44) unterteilbar ist, über den das Lichtbündel (34) aus der Scheibe (14) ausgekoppelt und auf den Empfänger (28) gelenkt wird, wobei die Lichtleitereinheit (30) Fresnellinsenbereiche und diesen zugeordnete reflektierende Bereiche aufweist, die in einer stufigen Struktur (40) der Lichtleitereinheit (30) gebildet sind, und wobei die Lichtleitereinheit (30) durch eine Platte gebildet ist, deren Vorderseite (38) die stufige Struktur (40) mit Stufen (54) aufweist, wobei die Platte so angeordnet ist, daß die Vorderseite (38) der Platte dem Sender (26) bzw. dem Empfänger (28) zugewandt ist, **dadurch gekennzeichnet, daß** sowohl wenigstens einige der Stufen (54) des Einkoppelabschnitts (42) als auch wenigstens einige der Stufen (54) des Auskoppelabschnitts (44) jeweils eine nach Art einer asphärischen Fresnellinse geformte Einkoppel- bzw. Auskoppelfläche (56) und eine dieser zugeordnete reflektierende Fläche (58) aufweisen und die reflektierenden Flächen (58) im wesentlichen senkrecht zur Scheibe (14) ausgerichtet sind.

2. Optische Sensorvorrichtung nach Anspruch 1, **dadurch gekennzeichnet, daß** die Lichtleitereinheit (30) auch Fresnellinsenbereiche aufweist, denen keine reflektierenden Bereiche zugeordnet sind.

3. Optische Sensorvorrichtung nach einem der vorhergehenden Ansprüche, **dadurch gekennzeichnet, daß** zwischen den einzelnen Fresnellinsenbereichen bzw. den zugeordneten reflektierenden Bereichen Umlenkbereiche mit einer solchen Brechungs- oder Reflexionsstruktur vorgesehen sind, daß auf die Umlenkbereiche auftreffendes Licht in eine die Funktion der optischen Sensorvorrichtung (12) nicht beeinträchtigende Richtung umgelenkt wird.

4. Optische Sensorvorrichtung nach einem der vorhergehenden Ansprüche, **dadurch gekennzeichnet, daß** die Lichtleitereinheit (30) spiegelsymmetrisch aufgebaut ist.

5. Optische Sensorvorrichtung nach einem der vorhergehenden Ansprüche, **dadurch gekennzeichnet, daß** die Lichtleitereinheit (30) einstückig ausgeführt ist.

6. Optische Sensorvorrichtung nach einem der vorhergehenden Ansprüche, **dadurch gekennzeichnet, daß** im Einkoppelabschnitt (42) der Lichtleitereinheit (30) die Fresnellinsenbereiche und die diesen zugeordneten reflektierenden Bereiche so angeordnet sind, daß jeweils ein Teil des vom Sender (26) ausgestrahlten Lichtbündels (34) über einen Fresnellinsenbereich in die Lichtleitereinheit (30) eingekoppelt und anschließend am zugeordneten reflektierenden Bereich reflektiert wird.

7. Optische Sensorvorrichtung nach einem der vorhergehenden Ansprüche, **dadurch gekennzeichnet, daß** im Einkoppelabschnitt (42) der Lichtleitereinheit (30) die reflektierenden Bereiche so angeordnet sind, daß die daran reflektierten Teile des vom Sender (26) ausgestrahlten Lichtbündels (34) insgesamt als paralleles Lichtbündel (34a) in die Scheibe (14) eingekoppelt werden.

8. Optische Sensorvorrichtung nach Anspruch 7, **dadurch gekennzeichnet, daß** der Winkel (α), unter dem das Lichtbündel (34a) in die Scheibe (14) eingekoppelt wird, etwa 45° beträgt.

9. Optische Sensorvorrichtung nach Anspruch 8, **dadurch gekennzeichnet, daß** der Winkel (β), unter dem das Lichtbündel (34b) aus der Scheibe (14) ausgekoppelt wird, etwa 45° beträgt.

10. Optische Sensorvorrichtung nach einem der vorhergehenden Ansprüche, **dadurch gekennzeichnet, daß** im Auskoppelabschnitt (44) der Lichtleitereinheit (30) die Fresnellinsenbereiche und die diesen zugeordneten reflektierenden Bereiche so angeordnet sind, daß jeweils ein Teil des aus der Scheibe (14) ausgekoppelten Lichtbündels (34b) an einem reflektierenden Bereich reflektiert und anschließend über den zugeordneten Fresnellinsenbereich aus der Lichtleitereinheit (30) ausgekoppelt wird.

11. Optische Sensorvorrichtung nach einem der vorhergehenden Ansprüche, **dadurch gekennzeichnet, daß** im Auskoppelabschnitt (44) der Lichtleitereinheit (30) die Fresnellinsenbereiche und die diesen zugeordneten reflektierenden Bereiche so angeordnet sind, daß Teile des aus der Scheibe (14) ausgekoppelten Lichtbündels (34b) von den reflektierenden Bereichen auf die zugeordneten Fresnellinsenbereiche reflektiert und dadurch als konvergierende Lichtbündelteile auf den Empfänger (28) gelenkt werden.

12. Optische Sensorvorrichtung nach einem der vorhergehenden Ansprüche, **dadurch gekennzeichnet, daß** in einem Gehäuse (22) der Sensorvorrichtung (10') wenigstens eine zusätzliche Taglicht-Sensoreinheit (48) untergebracht ist, wobei die Taglicht-Sensoreinheit (48) einen Lichtempfänger (50) und eine Lichtleitereinheit aufweist, die Licht aus einem definierten Bereich (52) der Umgebung auf dem Lichtempfänger (50) abbildet.

13. Optische Sensorvorrichtung nach Anspruch 12, **dadurch gekennzeichnet, daß** die Lichtleitereinheit der Taglicht-Sensoreinheit (48) eine asphärische Fresnellinse aufweist.

14. Optische Sensorvorrichtung nach Anspruch 12, **dadurch gekennzeichnet, daß** die Lichtleitereinheit der Taglicht-Sensoreinheit (48) Fresnellinsenbereiche und zugeordnete reflektierende Bereiche aufweist.

15. Verfahren zur Herstellung einer optischen Sensorvorrichtung nach einem der vorhergehenden Ansprüche, **dadurch gekennzeichnet, daß** die Lichtleitereinheit (30) durch Prägen einer Platte gebildet wird.

16. Verfahren nach Anspruch 15, **dadurch gekennzeichnet, daß** im selben Prägeschritt, in dem die Lichtleitereinheit (30) gebildet wird, zusätzlich wenigstens eine weitere Lichtleitereinheit für eine Taglicht-Sensoreinheit (48) gebildet wird.

## Claims

1. An optical sensor device (10, 10'), which can be coupled to a window (14), in particular to a windscreen of a motor vehicle, comprising a sensor unit (12) which includes an emitter (26), a receiver (28) and a light conductor unit (30) which can be divided into an input portion (42), through which a light beam (34) emitted by the emitter (26) is coupled into the window, and an output portion (44), through which the light beam (34) is coupled out of the window (14) and is directed onto the receiver (28), the light conductor unit (30) including Fresnel lens regions and reflecting regions which are associated thereto and formed in a stepped structure (40) of the light conductor unit (30), and the light conductor unit (30) being formed by a plate whose front side (38) includes the stepped structure (40) having steps (54), the plate being arranged such that the front side (38) of the plate faces the emitter (26) and/or the receiver (28), **characterized in that** at least some of the steps (54) of the input portion (42) and also at least some of the steps (54) of the output portion (44) each have an input or output surface (56) shaped in the manner of an aspherical Fresnel lens and a reflecting surface (58) associated to the input or output surface, and **in that** the reflecting surfaces (58) are oriented substantially perpendicularly to the window (14).

2. The optical sensor device according to claim 1, **characterized in that** the light conductor unit (30) also includes Fresnel lens regions to which no reflecting regions are associated.

3. The optical sensor device according to either of the preceding claims, **characterized in that** diverting regions are provided between the individual Fresnel lens regions and/or between the associated reflecting regions, the diverting regions having a refractive or reflective structure such that light impinging on the diverting regions is diverted in a direction which does not impair the function of the optical sensor device (12).

4. The optical sensor device according to any of the preceding claims, **characterized in that** the light conductor unit (30) has a mirror-symmetric design.

5. The optical sensor device according to any of the preceding claims, **characterized in that** the light conductor unit (30) is formed in one piece.

6. The optical sensor device according to any of the preceding claims, **characterized in that** in the input portion (42) of the light conductor unit (30), the Fresnel lens regions and the reflecting regions associated thereto are each arranged such that part of the light beam (34) emitted by the emitter (26) is each coupled into the light conductor unit (30) via a Fresnel lens region and subsequently reflected on the associated reflecting region.

7. The optical sensor device according to any of the preceding claims, **characterized in that** in the input portion (42) of the light conductor unit (30), the reflecting regions are arranged such that the parts reflected thereon of the light beam (34) emitted by the emitter (26) are altogether coupled into the window (14) as a parallel light beam (34a).

8. The optical sensor device according to claim 7, **characterized in that** the angle (α) at which the light beam (34a) is coupled into the window (14) is approximately 45°.

9. The optical sensor device according to claim 8, **characterized in that** the angle (β) at which the light beam (34b) is coupled out of the window (14) is approximately 45°.

10. The optical sensor device according to any of the preceding claims, **characterized in that** in the output portion (44) of the light conductor unit (30), the Fresnel lens regions and the reflecting regions associated thereto are each arranged such that part of the light beam (34b) coupled out of the window (14) is each reflected on a reflecting region and subsequently coupled out of the light conductor unit (30) via the associated Fresnel lens region.

11. The optical sensor device according to any of the preceding claims, **characterized in that** in the output portion (44) of the light conductor unit (30), the Fresnel lens regions and the reflecting regions associated thereto are arranged such that parts of the light beam (34b) coupled out of the window (14) are reflected by the reflecting regions onto the associated Fresnel lens regions and are thereby directed onto the receiver (28) as converging light beam parts.

12. The optical sensor device according to any of the preceding claims, **characterized in that** in a housing (22) of the sensor device (10'), at least one additional daylight sensor unit (48) is accommodated, the daylight sensor unit (48) including a light receiver (50) and a light conductor unit which maps light from a defined region (52) of the surroundings on the light receiver (50).

13. The optical sensor device according to claim 12, **characterized in that** the light conductor unit of the daylight sensor unit (48) includes an aspherical Fresnel lens.

14. The optical sensor device according to claim 12, **characterized in that** the light conductor unit of the daylight sensor unit (48) includes Fresnel lens regions and associated reflecting regions.

15. A method of producing an optical sensor device according to any of the preceding claims, **characterized in that** the light conductor unit (30) is formed by embossing a plate.

16. The method according to claim 15, **characterized in that** at least one further light conductor unit for a daylight sensor unit (48) is additionally formed in the same embossing step in which the light conductor unit (30) is formed.

## Revendications

1. Dispositif de capteur optique (10, 10') susceptible d'être couplé à une vitre (14), en particulier à un pare-brise d'un véhicule automobile, comportant un ensemble capteur (12) qui comprend un émetteur (26), un récepteur (28) et une unité de guide de lumière (30) subdivisée en une portion de couplage entrant (42) par laquelle un faisceau lumineux (34) émis par l'émetteur (26) entre dans la vitre, et en une portion de couplage sortant (44) par laquelle le faisceau lumineux (34) sort de la vitre (14) et est dirigé vers le récepteur (28), l'unité de guide de lumière (30) comprenant des zones de lentille de Fresnel et des zones réfléchissantes associées à celles-ci qui sont formées en une structure étagée (40) de l'unité de guide de lumière (30), l'unité de guide de lumière (30) étant formée par une plaque dont la face avant (38) présente la structure étagée (40) comprenant des étages (54), la plaque étant agencée de telle sorte que la face avant (38) de la plaque est tournée vers l'émetteur (26) ou vers le récepteur (28), **caractérisé en ce que** quelques-uns au moins des étages (54) de la portion de couplage entrant (42) aussi bien que quelques-uns au moins des étages (54) de la portion de couplage sortant (44) comprennent chacun une surface de couplage entrant ou sortant (56) formée à la manière d'une lentille de Fresnel asphérique et une surface réfléchissante (58) associée à celle-ci, et les surfaces réfléchissantes (58) sont orientées sensiblement perpendiculairement à la vitre (14).

2. Dispositif de capteur optique selon la revendication 1, **caractérisé en ce que** l'unité de guide de lumière (30) comprend également des zones de lentille de Fresnel dépourvues de zones réfléchissantes associées.

3. Dispositif de capteur optique selon l'une des revendications précédentes, **caractérisé en ce que** des zones de renvoi sont prévues entre les zones de lentille de Fresnel individuelles ou entre les zones réfléchissantes associées, qui ont une structure de réfraction ou de réflexion telle que la lumière incident sur les zones de renvoi est renvoyée dans une direction qui n'entrave pas la fonction du dispositif de capteur optique (12).

4. Dispositif de capteur optique selon l'une des revendications précédentes, **caractérisé en ce que** l'unité de guide de lumière (30) est conçue à symétrie axiale.

5. Dispositif de capteur optique selon l'une des revendications précédentes, **caractérisé en ce que** l'unité de guide de lumière (30) est réalisée d'un seul tenant.

6. Dispositif de capteur optique selon l'une des revendications précédentes, **caractérisé en ce que** dans la portion de couplage entrant (42) de l'unité de guide de lumière (30), les zones de lentille de Fresnel et les zones réfléchissantes associées à celles-ci sont agencées de telle sorte qu'une partie respective du faisceau lumineux (34) émis par l'émetteur (26) entre dans l'unité de guide de lumière (30) par une zone de lentille de Fresnel et est ensuite réfléchie sur la zone réfléchissante associée.

7. Dispositif de capteur optique selon l'une des revendications précédentes, **caractérisé en ce que** dans la portion de couplage entrant (42) de l'unité de guide de lumière (30), les zones réfléchissantes sont agencées de telle sorte que les parties du faisceau lumineux (34) émis par l'émetteur (26) qui y sont réfléchies entrent dans la vitre (14) dans leur ensemble sous forme de faisceau lumineux (34a) parallèle.

8. Dispositif de capteur optique selon la revendication 7, **caractérisé en ce que** l'angle (α) sous lequel le faisceau lumineux (34a) entre dans la vitre (14) s'élève à environ 45°.

9. Dispositif de capteur optique selon la revendication 8, **caractérisé en ce que** l'angle (β) sous lequel le faisceau lumineux (34b) sort de la vitre (14) s'élève à environ 45°.

10. Dispositif de capteur optique selon l'une des revendications précédentes, **caractérisé en ce que** dans la portion de couplage sortant (44) de l'unité de guide de lumière (30), les zones de lentille de Fresnel et les zones réfléchissantes associées à celles-ci sont agencées de telle sorte qu'une partie respective du faisceau lumineux (34b) sortant de la vitre (14) est réfléchie sur une zone réfléchissante et sort ensuite de l'unité de guide de lumière (30) par la zone de lentille de Fresnel associée.

11. Dispositif de capteur optique selon l'une des revendications précédentes, **caractérisé en ce que** dans la portion de couplage sortant (44) de l'unité de guide de lumière (30), les zones de lentille de Fresnel et les zones réfléchissantes associées à celles-ci sont agencées de telle sorte que des parties du faisceau lumineux (34b) sortant de la vitre (14) sont réfléchies sur les zones de lentille de Fresnel par les zones réfléchissantes et sont ainsi dirigées vers le récepteur (28) en tant que parties convergentes du faisceau lumineux.

12. Dispositif de capteur optique selon l'une des revendications précédentes, **caractérisé en ce qu'**au moins un ensemble de capteur de lumière diurne (48) supplémentaire est logé dans un boîtier (22) du dispositif de capteur (10'), l'ensemble de capteur de lumière diurne (48) comprenant un récepteur de lumière (50) et une unité de guide de lumière qui reproduit sur le récepteur de lumière (50) la lumière d'une zone définie (52) des alentours.

13. Dispositif de capteur optique selon la revendication 12, **caractérisé en ce que** l'unité de guide de lumière de l'ensemble de capteur de lumière diurne (48) comprend une lentille de Fresnel asphérique.

14. Dispositif de capteur optique selon la revendication 12, **caractérisé en ce que** l'unité de guide de lumière de l'ensemble de capteur de lumière diurne (48) comprend des zones de lentille de Fresnel et des zones réfléchissantes associées.

15. Procédé de réalisation d'un dispositif de capteur optique selon l'une des revendications précédentes, **caractérisé en ce que** l'unité de guide de lumière (30) est formée par estampage d'une plaque.

16. Procédé selon la revendication 15, **caractérisé en ce que** dans la même étape d'estampage dans laquelle se forme l'unité de guide de lumière (30), on forme au moins une autre unité de guide de lumière pour un ensemble de capteur de lumière diurne (48).
